# EUROPÄISCHE PATENTSCHRIFT

(11) **EP 1 340 922 B1**
(45) Veröffentlichungstag und Bekanntmachung des Hinweises auf die Patenterteilung: **08.06.2005**
(21) Anmeldenummer: 02025440.5
(22) Anmeldetag: 15.11.2002
(51) Int. Cl.: F16D 1/033, F16D 1/076

(54) **Vorrichtung zum Zentrieren eines Gelenkteils**
Device to center a joint
Dispositif pour centrer une articulation

(30) Priorität: 28.02.2002 DE 10208962
(43) Veröffentlichungstag der Anmeldung: 03.09.2003
(73) Patentinhaber: AUDI AG, 85045 Ingolstadt (DE)
(72) Erfinder: Rehr, Alfred, 85120 Hepberg (DE)
(74) Vertreter: Asch, Konrad, Dipl.-Ing.

(56) Entgegenhaltungen:
- DE-C- 636 367
- DE-C- 4 310 007
- DE-U- 29 721 218
- US-A- 4 541 817

## Beschreibung

Die Erfindung betrifft eine Vorrichtung aus einen Getriebeflansch und einen Gelenkteil, die zum des Zentrieren Gelenkteils, insbesondere der Antriebswelle an dem Getriebeflansch eines Getriebes in einem Kraftfahrzeug dient gemäß dem Oberbegriff des Patentanspruches 1.

Zur Vermeidung von Unwuchten und damit verbundenen Komforteinbußen und Verschleißerscheinungen bei Antriebsanordnungen in Kraftfahrzeugen ist die Zentrierung der an den Getrieben (z.B. Hinterachs-Differenzial oder Geschwindigkeits-Wechselgetriebe) anzuschließenden Antriebswellen (z.B. Kardanwelle, etc.) besonders zu beachten, insbesondere wenn diese Wellen mit relativ hoher Drehzahl laufen.

Bekannt sind Steckverbindungen für exakte Zentrierungen in Form von angeformten ringförmigen Kragen (EP 0 671 568 B1) z.B. am Gelenkteil der Antriebswelle, die in entsprechende Bohrungen z.B. des getriebeseitigen Abtriebs- oder Antriebsflansches einragen, wobei diese Zentrierung mit Presssitz ausgeführt sein kann. Es sind dabei enge Toleranzen einzuhalten und es können sich Probleme wie hohe Einpresskräfte bei der Montage ergeben. Zudem ist es bekannt (DE 297 21 218 U), einen solchen ringförmigen Kragen als Auskragung an einer Blechscheibe herzustellen, die mit einem Ringflansch am Außenteil des Gelenkteils festgelegt ist und die zusammen mit einem Getriebeflansch verschraubt sind.

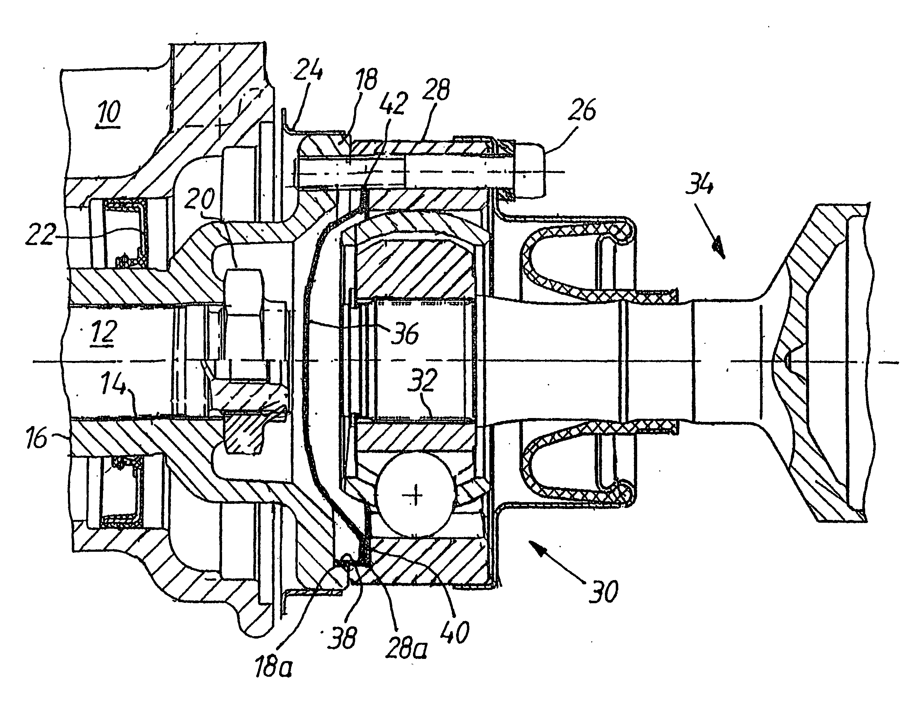

Weiter ist eine Vorrichtung aus einen Getriebeflansch und einen Gelenkteil, die zum Zentrieren des an dem Getriebeflansch anschraubbaren Gelenkteils, insbesondere der Antriebswelle an dem Getriebeflansch eines Getriebes in einem Kraftfahrzeug dient bekannt (GB 1577335, Fig. 9), wobei das Gelenkteil mit einem rotationssymmetrischem Fortsatz in einer stufenförmigen Ausnehmung des Flansches zentriert und mittels mehrerer achsparalleler Schrauben gehalten ist und der Fortsatz durch eine in das Gelenkteil und in den Getriebeflansch einragende Hülse gebildet ist. Dabei ist die Hülse gelenkseitig in einer im Durchmesser gleichen, rotationssymmetrischen Ausnehmung aufgenommen und die gelenkseitige Ausnehmung ist ebenfalls stufenförmig ausgeführt. Zudem ist die Hülse an einen das Gelenkteil nach außen, in Richtung des Getriebeflansches verschließenden Deckel angeformt.

Zudem ist eine Vorrichtung aus einen Getriebeflansch und einen Gelenkteil, die zum Zentrieren des an dem Getriebeflansch eines Kraftfahrzeuges anschraubbaren Gelenkteils dient bekannt (US 1836987, Fig. 1), wobei das Gelenkteil mit einem rotationssymmetrischen Fortsatz in einer stufenförmigen Ausnehmung des Flansches zentriert und mittels mehrerer achsparalleler Schrauben gehalten ist und wobei der Fortsatz durch einen in das Gelenkteil einragenden zylindrischen Außenabschnitt und durch einen in den Getriebeflansch einragenden hohlzylindrischen Abschnitt gebildet ist und der hohlzylindrische Abschnitt hülsenförmig ausgebildet ist.

Des Weiteren ist ein Gelenkteil bekannt (DE 28 04 339 C2, Fig. 1), wobei eine Schraube im Gelenkteil auf eine Flanschverbindung hinweist. Zudem ist ein Gelenkteil nach außen in Richtung des Getriebeflansches verschließbarer Deckel teilweise dargestellt. Der Deckel bildet einen hülsenförmigen Fortsatz, der sowohl in das Gelenkteil einragt als auch herausragt und als Zentrierung verwendbar ist.

Zudem sind weitere Vorrichtungen zum Zentrieren bekannt (DE 33 26 990 A1, Fig. 1; DE 43 17 606 C1, Fig. 2 i. V. m. Fig. 4; US 31 06 077, Fig. 1), die u. a. auch die Funktion eines verschließenden Deckels übernehmen, sowie eine Zentrierung (GB 1336129, Fig. 1) mit am Gelenkteil angeformten Kragen, der in eine Bohrung des Getriebeflansches einragt, wobei das Gelenk einen dieses nach außen in Richtung des Getriebeflansches verschließenden Deckel aufweist.

Aufgabe der Erfindung ist es, eine hinsichtlich des Fertigungs- und Montageaufwandes sowie der Zentrierfunktion einfachere und verbesserte Vorrichtung im Vergleich zu einer aus dem Stand der Technik bekannten Vorrichtung vorzuschlagen.

Diese Aufgabe wird erfindungsgemäß mit den kennzeichnenden Merkmalen des Patentanspruches 1 gelöst. Vorteilhafte und besonders zweckmäßige Weiterbildungen der Erfindung sind den weiteren Patentansprüchen entnehmbar.

Erfindungsgemäß ist die Tiefe der Ausnehmungen auf die Länge der Hülse so abgestimmt, dass die Hülse bei am getriebeflansch montiettem Gelenkteil mit Vorspannung gehalten ist.

Durch entsprechende Anpassung deren Tiefe an die Länge der Hülse wird diese automatisch mit der Montage der Antriebswelle am Getriebeflansch bei guter Zentrierfunktion lagegesichert. Damit wird bei baulich geringem Aufwand eine präzise Zentrierung sichergestellt. Die Hülse kann bei einem Wechsel beispielsweise der Antriebswelle wieder verwendet oder ggf. problemlos mit ausgetauscht werden.

Bei einem Antriebswellengelenk mit einem das Gelenk zum Abtriebsflansch hin verschließenden Deckel kann fertigungstechnisch besonders vorteilhaft die Hülse an den Deckel angeformt sein. Damit wird sowohl eine Teileverminderung als auch eine Montagevereinfachung erzielt. Der Deckel dient funktionserweitert neben seiner Dichtfunktion zugleich zur Zentrierung des Gelenkteils bzw. der Antriebswelle.

Zudem kann bei Verwendung einer Dichtung zwischen dem Deckel und dem Gelenkteil die Dichtung gezielt vorgespannt bzw. angepresst werden. Die Dichtung kann dabei als einfache Ringdichtung separat beigelegt oder als Beschichtung direkt auf den Deckel aufgespritzt oder aufvulkanisiert sein.

Um die Fügekräfte der Hülse bei der Montage des Gelenkteils und deren Zentrierfähigkeit bei beherrschbaren Toleranzen gezielt zu steuern, kann die Hülse radial federnd nachgiebig gestaltet sein. Dies kann beispielsweise durch eine offene, C-förmig geformte Blattfeder erfolgen, die mit definierter Vorspannung ähnlich eines Spannstiftes eingesetzt wird oder aber durch Ausbildung von mehreren radial abragenden Federzungen, die ebenfalls mit moderaten Fügekräften die Zentrierung des Gelenkteils bei der Montage sicherstellen.

Schließlich kann die Hülse (mit oder ohne Deckel) an ihrem Außenumfang mit einer Rändelung oder Rillung oder ähnlichen Vertiefungen versehen sein, die örtlich die Flächenpressung erhöhen und ggf. begrenzt plastische Verformungen der Hülse bei der Montage zulassen, um ebenfalls gezielt einstellbare Fügekräfte bzw. Einpresskräfte zu ermöglichen.

Ein Ausführungsbeispiel der Erfindung ist im Folgenden mit weiteren Einzelheiten näher beschrieben.

Der anliegende schematische Zeichnungsausschnitt zeigt einen teilweisen Längsschnitt durch den Anschlussbereich einer Antriebswelle an einem Hinterachs-Differenzial für Kraftfahrzeuge mit der Vorrichtung zum Zentrieren des Gelenkteils relativ zum Getriebeflansch.

In einem nicht näher dargestelltem Gehäuse 10 eines Hinterachs-Differenziales für Kraftfahrzeuge ist eine Trieblingswelle 12 drehbar gelagert, an deren äußerem Ende über eine entsprechende Keilverzahnung 14 der nabenförmige Abschnitt 16 eines rotationssymmetrischen Getriebeflansches 18 aufgesteckt und über eine Schraubverbindung 20 befestigt ist. Ein Wellendichtring 22 dichtet den Austritt des Abschnittes 16 gegenüber dem Gehäuse 10 ab. Ferner ist am Außenumfang des Getriebeflansches 18 ein ringförmiges Abdeckblech 24 angeordnet.

Mittels mehrerer achsparallel angeordneter Schrauben 26 (es ist nur eine Schraube 26 ersichtlich) ist das radial äußere Gelenkteil 28 eines Gleichlaufgelenkes 30 (Tripodegelenk) an dem Getriebeflansch 18 befestigt. Das Gleichlaufgelenk 30 (es könnte auch ein Kardangelenk verwendet sein) ist über eine Keilverzahnung 32 wie ersichtlich mit der Antriebswelle 34 (eine sogenannte Kardanwelle) verbunden, wobei die Antriebswelle 34 an ihrem anderen nicht dargestelltem Ende an einem Geschwindigkeits-Wechselgetriebe trieblich angeschlossen ist.

Das Hinterachs-Differenzial und die Antriebswelle 34 mit den Details des Gleichlaufgelenkes 30 sind nur soweit beschrieben, als dies für das Verständnis der vorliegenden Erfindung erforderlich ist. Soweit nicht beschrieben, sind diese Bauteile dem Stand der Technik entsprechend.

An der dem Getriebeflansch 18 zugewandten Seite weist das ringförmige Gelenkteil 28 eine stufenförmige, rotationssymmetrische Ausnehmung 28a auf, in die ein das Innere des Gleichlaufgelenkes 30 abschließender Deckel 36 mit einer daran angeformten, radial äußeren Hülse 38 eingesetzt ist. Zur Erzielung einer zuverlässigen Abdichtung ist in dem ringförmigen Anlagebereich zwischen dem Deckel 36 und dem Gelenkteil 28 eine Ringdichtung 40 angeordnet.

Wie aus der Schnittzeichnung ohne weiteres ersichtlich ist, ist zum erforderlichen Freigang der Schrauben 26 die Hülse 38 jeweils mit Ausklinkungen (bei 42) versehen.

Mit gleichem Außendurchmesser ist der Ausnehmung 28a im Gelenkteil 28 gegenüberliegend eine korrespondierende, stufenförmige und rotationssymmetrische Ausnehmung 18a im Getriebeflansch 18 eingearbeitet, in die die Hülse 38 zur Zentrierung des Gelenkteils 28 bzw. der gesamten Antriebswelle 34 eingesetzt ist.

Die Tiefe der Ausnehmungen 18a, 28a im Gelenkflansch 18 und im Gelenkteil 28 sind so ausgelegt, dass die Hülse 38 und der Deckel 36 unter Zwischenlage der Ringdichtung 40 im Einbauzustand unter Vorspannung gehalten sind. Der Außendurchmesser der Hülse 38 ist auf die vorzugsweise gleichen Innendurchmesser der Ausnehmungen 28a, 18a so abgestimmt, dass die Hülse 38 mit Presssitz in den besagten Ausnehmungen gehalten ist.

Bei der Montage der beschriebenen Zentriervorrichtung wird zunächst der Deckel 36 mit der Hülse 38 und der Ringdichtung 40 in die Ausnehmung 28a des Gelenkteils 28 eingesetzt bzw. eingepresst. Der überstehende Abschnitt der Hülse 38 bildet dabei einen Fortsatz, der bei der Montage der Antriebswelle 30 zu deren Zentrierung in die Ausnehmung 18a des Getriebeflansches 18 beispielsweise durch Anziehen der Schrauben 26 eingedrückt wird. Dabei kann es zweckmäßig sein, an der Ausnehmung 18a oder an der Hülse 38 eine Anfasung vorzusehen, um Verkantungen zu vermeiden.

Der Deckel 36 und/oder die Hülse 38 können als ein dünnwandiges Blech-Tiefziehteil hergestellt sein. Es kann jedoch auch ausreichend sein, als Material Kunststoff zu verwenden und den Deckel 36 und/oder die Hülse 38 im Spritzgießverfahren zu fertigen.

Die Erfindung ist nicht auf das beschriebene Ausführungsbeispiel beschränkt. Ggf. können der Deckel 36 und die Hülse 38 als getrennte Bauteile ausgeführt sein. Die Hülse 38 könnte aus Federstahl als offene, C-förmig gebogene Blattfeder ausgeführt sein oder aber als Ringteil mit radial abragenden Federzungen. Diese Ausbildungen ermöglichen die Anwendung relativ grober Fertigungstoleranzen bei geringen Fügekräften bzw. vereinfachter Montage.

Schließlich könnte der Außenumfang der Hülse 38 mit einer Rändelung oder Rillung versehen sein, um Fertigungstoleranzen auszugleichen und die Fügekräfte bzw. Einpresskräfte zu verringern. Dabei können ggf. auftretende hohe Materialspannungen durch örtliche plastische Oberflächenverformungen an der Hülse 38 kompensiert werden. Dazu könnte es angezeigt sein, die Hülse 38 (ggf. mit Deckel 36) bei jeder Demontage und Wiedermontage der Antriebswelle 34 zu erneuern.

## Patentansprüche

1. Vorrichtung aus einem Getriebeflansch und einen Gelenkteil, die zum Zentrieren des an dem Getriebeflansch anschraubbaren Gelenkteils, insbesondere der Antriebswelle an dem Getriebeflansch (18) eines Getriebes in einem Kraftfahrzeug dient wobei das Gelenkteil mit einem rotationssymmetrischem Fortsatz in einer stufenförmigen Ausnehmung (18a) des Flansches zentriert und mittels mehrerer achsparalleler Schrauben gehalten ist und der Fortsatz durch eine in das Gelenkteil (28) und in den Getriebeflansch (18) einragende Hülse (38) gebildet ist, wobei
die Hülse (38) gelenkseitig in einer im Durchmesser gleichen, rotationssymmetrischen Ausnehmung (28a) aufgenommen ist und die gelenkseitige Ausnehmung (28a) ebenfalls stufenförmig ausgeführt ist,
**dadurch gekennzeichnet,**
**dass** die Tiefe der Ausnehmungen (28a, 18a) auf die Länge der Hülse (38) so abgestimmt ist, dass die Hülse (38) bei an Getriebeflansh montiertem Gelenkteil (28) mit Vorspannung gehalten ist.

2. Vorrichtung nach Anspruch 1, **dadurch gekennzeichnet, dass** die Hülse (38) an einen das Gelenkteil (28) nach außen in Richtung des Getriebeflansches (18) verschließenden Deckel (36) angeformt ist.

3. Vorrichtung nach Anspruch 2, **dadurch gekennzeichnet, dass** zwischen dem Deckel (36) und dem Gelenkteil (28) eine Ringdichtung (40) vorgesehen ist.

4. Vorrichtung nach einem oder mehreren der Ansprüche 1 bis 3, **dadurch gekennzeichnet, dass** die Hülse (38) mit Presssitz in der Ausnehmung (28a, 18a) des Gelenkteils (28) und/oder des Getriebeflansches (18) gehalten ist.

5. Vorrichtung nach einem oder mehreren der Ansprüche 1 bis 4, **dadurch gekennzeichnet, dass** die Hülse (38) radial federnd nachgiebig ausgebildet ist.

6. Vorrichtung nach Anspruch 5, **dadurch gekennzeichnet, dass** die Hülse (38) aus Federstahl C-förmig offen ausgebildet ist.

7. Vorrichtung nach Anspruch 5, **dadurch gekennzeichnet, dass** an die Hülse (38) mehrere, radial nach außen abstehende, federnde Zungen angeformt sind.

8. Vorrichtung nach einem der Ansprüche 1 bis 7, **dadurch gekennzeichnet, dass** die Hülse (38) und der Deckel (36) aus Kunststoff gefertigt sind.

9. Vorrichtung nach einem der Ansprüche 1 bis 7, **dadurch gekennzeichnet, dass** die Hülse (38) als ein Blech-Tiefziehteil ausgeführt ist.

10. Vorrichtung nach einem der Ansprüche 1 bis 9, **dadurch gekennzeichnet, dass** die Hülse (38) an ihrem Außenumfang mit einer Rändelung oder Rillung oder dergleichen versehen ist.

## Claims

1. Device comprising a transmission flange and a joint part and serving to centre the joint part, in particular of the drive shaft, that can be screwed to the transmission flange, on the transmission flange (18) of a transmission in a motor vehicle, the joint part being centred by a rotationally symmetrical projection in a step-shaped recess (18a) of the flange and being retained by means of a plurality of screws disposed parallel to the axis, and the projection being formed by a collar (38) projecting into the transmission flange (18), the collar (38) being received on the joint side in a rotationally symmetrical recess (28a) of the same diameter and the recess (28a) on the joint side also having a step-shaped configuration, **characterised in that** the depths of the recesses (28a, 18a) are so coordinated with the length of the collar (38) that the collar (38) is retained with prestress when the joint part (28) is installed on the transmission flange.

2. Device according to claim 1, **characterised in that** the collar (38) is formed integrally on a cover (36) occluding the joint part (28) towards the outside in the direction of the transmission flange (18).

3. Device according to claim 2, **characterised in that** an annular seal (40) is provided between the cover (36) and the joint part (28).

4. Device according to one or more of claims 1 to 3, **characterised in that** the collar (38) is retained with a press fit in the recess (28a, 18a) of the joint part (28) and/or of the transmission flange (18).

5. Device according to one or more of claims 1 to 4, **characterised in that** the collar (38) is configured to be resiliently compliant radially.

6. Device according to claim 5, **characterised in that** the collar (38) is of spring steel and has an open C-shaped configuration.

7. Device according to claim 5, **characterised in that** a plurality of radially outwardly projecting, resilient tabs are formed integrally on the collar (38).

8. Device according to any one of claims 1 to 7, **characterised in that** the collar (38) and the cover (36) are made of plastics material.

9. Device according to any one of claims 1 to 7, **characterised in that** the collar (38) is in the form of a deep-drawn sheet-metal part.

10. Device according to any one of claims 1 to 9, **characterised in that** the collar (38) is provided on its outer periphery with a knurl or fluting or the like.

## Revendications

1. Dispositif, formé d'une bride de transmission et d'une partie d'articulation, servant au centrage de la partie d'articulation susceptible d'être montée par vissage sur la bride de transmission, en particulier de l'arbre d'entraînement sur la bride de transmission (18) d'une transmission dans un véhicule automobile, la partie d'articulation assurant le centrage à l'aide d'un prolongement, répondant à une symétrie de rotation, dans un évidement (18a) à forme étagée de la bride et étant maintenue au moyen d'une pluralité de vis à axes parallèles, et le prolongement étant formé par une douille (38) pénétrant dans la partie d'articulation (28) et dans la bride de transmission (18),
où
la douille (38) est logée, côté articulation, dans un évidement (28a) répondant à une symétrie de rotation, de diamètre identique, et l'évidement (28a) situé côté articulation étant également à forme étagée,
**caractérisé en ce que**
la profondeur des évidements (28a, 18a) est adaptée à la longueur de la douille (38), de manière que la douille (38) soit maintenue avec une précontrainte lorsque la partie d'articulation (28) est montée sur la bride de transmission.

2. Dispositif selon la revendication 1, **caractérisé en ce que** la douille (38) est formée d'un seul tenant sur un couvercle (36), fermant la partie d'articulation (28) vers l'extérieur, dans la direction de la bride de transmission (18).

3. Dispositif selon la revendication 2, **caractérisé en ce qu'**un joint d'étanchéité annulaire (40) est prévu entre le couvercle (36) et la partie d'articulation (28).

4. Dispositif selon l'une ou plusieurs des revendications 1 à 3, **caractérisé en ce que** la douille (38) est maintenue avec un ajustement avec serrage dans l'évidement (28a, 18a) de la partie d'articulation (28) et/ou de la bride de transmission (18).

5. Dispositif selon l'une ou plusieurs des revendications 1 à 4, **caractérisé en ce que** la douille (38) est déformable élastiquement, en direction radiale.

6. Dispositif selon la revendication 5, **caractérisé en ce que** la douille (38) est réalisée en acier à ressort, en étant ouverte en forme de C.

7. Dispositif selon la revendication 5, **caractérisé en ce qu'**une pluralité de languettes élastiques faisant saillie radialement vers l'extérieur sont formées d'un seule tenant sur la douille (38).

8. Dispositif selon l'une des revendications 1 à 7, **caractérisé en ce que** la douille (38) et le couvercle (36) sont fabriqués en matière synthétique.

9. Dispositif selon l'une des revendications 1 à 7, **caractérisé en ce que** la douille (38) est réalisée sous la forme de pièce en tôle, obtenue par étirage profond.

10. Dispositif selon l'une des revendications 1 à 9, **caractérisé en ce que** la douille (38) est munie, sur sa périphérie extérieure, d'un moletage ou d'une cannelure, ou analogues.
